# EUROPÄISCHE PATENTSCHRIFT

(11) **EP 2 264 270 B1**
(45) Veröffentlichungstag und Bekanntmachung des Hinweises auf die Patenterteilung: **29.07.2015**
(21) Anmeldenummer: 10166372.2
(22) Anmeldetag: 17.06.2010
(51) Int. Cl.: E05F 3/12, F16K 17/00

(54) **Ventil für einen Türschließer**
Valve for a door closer
Soupape pour un ferme-porte

(30) Priorität: 17.06.2009 DE 102009026990
(43) Veröffentlichungstag der Anmeldung: 22.12.2010
(73) Patentinhaber: GEZE GmbH, 71229 Leonberg (DE)
(72) Erfinder: Huber, Dirk, 71409, Schwaikheim (DE)

(56) Entgegenhaltungen:
- EP-A1- 0 545 680
- DE-A1- 2 526 437
- DE-A1- 10 228 510

## Beschreibung

Die Erfindung betrifft ein Ventil für einen Türschließer nach dem Oberbegriff des Anspruchs 1.

Aus der DE 25 2G 437 A1 ist ein Kraftspeicher mit Dämpfungseinrichtung, insbesondere für Türschließer bekannt, mit einem die hydraulische Steuerung temperaturabhängig beeinflussenden Ventil, in welchem sich ein Ventlikegel auf einem In einem Hohlraum in einem Ventilkörper des Ventils angeordneten Dehnstoff abstützt. Hier ist zwischen Ventilkegel und Dehnstoff eine Dichtung angeordnet, durch welche die Wirkung des Dehnstoffs nicht weiter beeinflussbar ist.

In der DE 102 28 510 A1 ist ein Verstellelement zur Beeinflussung eines Ventils beschrieben, Das Verstellelement ist ein Bimetall, kann also temperaturabhängig nur zwei Stellungen einnehmen.

In der EP 0 545 680 A1 ist eine Membran in der Gehäusewand eines Bodentürschließers beschrieben, durch welche der Ölinnendruck im Gehäuse geregelt wird. Ein Ventil wird durch die Membran nicht beeinflusst.

Aus der DE 92 03 872 U1 ist ein Türschließer mit einem in einem Gehäuse abhängig von der Türbewegung verschiebbaren, fluidgedämpften Kolben bekannt, wobei durch den Kolben das Fluid durch mindestens einen Strömungskanal und mindestens ein im Strömungskanal angeordnetes, einstellbares Drosselventil förderbar ist, und wobei das Drosselventil einen thermostatischen Drosselkörper aufweist, um die Abhängigkeit der Fluiddrosselung von der temperaturbedingten Viskositätsänderung des Fluids zu vermindern. Dabei weisen der Drosselkörper oder der Strömungskanal mindestens einen Abschnitt mit einem gekrümmten Verlauf der Drosselkörperwandung bzw. der Strömungskanalwandung auf, wobei sich der Drosselspalt für das Fluid bei der thermostatischen Einstellung des Drosselventils nicht linear ändert, um eine im Wesentlichen temperaturunabhängige Fluiddurchflussmenge durch das Drosselventil zu bewirken. Nachteilig bei dieser durch temperaturabhängige Längenausdehnung des Ventils oder von Teilen des Ventils gesteuerten Ventilöffnungsweite ist, dass damit nur ein begrenzter Temperaturbereich abgedeckt werden kann. Vor allem bei sehr tiefen Temperaturen ist die Wirkung einer derartigen Temperaturkompensation zu gering, um die Viskositätserhöhung der Hydraulikflüssigkeit ausgleichen zu können.

Ein hydraulischer Türschließer weist einen in einem Schließergehäuse angeordneten, mit einer Feder beaufschlagten Kolben auf, welcher mit einer Welle zusammenwirkt, an der ein Hebel zum Betätigen einer Tür angeordnet ist. Beim Öffnen der Tür wird der Hebel betätigt und über die Welle und den Kolben die am Kolben anliegende Feder gespannt. Dabei kann die im Schließergehäuse befindliche Hydraulikflüssigkeit über Hydraulikkanäle und Ventile von einer Kolbenseite auf die andere überströmen, da sich die Kolbenräume beiderseits des Kolbens durch dessen Verschiebung verändern. Dabei wird beim Öffnen der Tür ein möglichst leichtes Überströmen der Hydraulikflüssigkeit ermöglicht, um ein ungebremstes Betätigen der Tür zu erzielen. Beim selbsttätigen Schließen der Tür wird durch das Entspannen der beim Öffnen gespannten Feder der Kolben wieder in seine Ausgangslage zurückgeführt, wobei die Hydraulikflüssigkeit wiederum überströmen muss. Durch die Anordnung von Hydraulikkanälen mit Ventilen kann der Schließvorgang gebremst erfolgen, wobei mehrere Phasen des Schließvorgangs mit unterschiedlichen Schließgeschwindigkeiten möglich sind, wodurch ein sicheres Schließen der Tür erfolgen kann.

Durch die temperaturabhängige Viskosität der Hydraulikflüssigkeit ist besonders bei Außentüren witterungsbedingt ein Nachstellen der Ventile erforderlich, um das gewünschte Schließverhalten zu gewährleisten. Um dies weitgehend zu vermeiden, werden temperaturabhängige Ventile eingesetzt, welche die temperaturabhängige Ausdehnung von Werkstoffen ausnutzen, wobei der Durchflussquerschnitt für die überströmende Hydraulikflüssigkeit bei abnehmenden Temperaturen vergrößert wird.

Der Erfindung liegt die Aufgabe zugrunde, die Temperaturstabilität eines Türschließers zu verbessern.

Die Aufgabe wird durch die Merkmale des Anspruchs 1 gelöst.

Die Unteransprüche bilden vorteilhafte Ausgestaltungsmöglichkeiten der Erfindung.

Das Ventil ist in einen Hydraulikkanal eines Türschließers so angeordnet, dass es von außerhalb des Gehäuses zugänglich ist. Das Ventil ist beispielsweise in einen erweiterten Bereich des Hydraulikkanals einschraubbar, wobei am Ventilkörper eine Werkzeugaufnahme vorgesehen ist, welche das Einschrauben des Ventils mittels eines Werkzeugs ermöglicht. Damit kann auch die Lage des Ventils im Gehäuse des Türschließers zur Grundeinstellung bestimmt werden. Am Ventilkörper können Dichtelemente, wie beispielsweise ein in einer Nut des Ventilkörpers angeordneter Dichtring, vorgesehen sein, um ein Austreten von Hydraulikflüssigkeit aus dem Türschließer zu vermeiden. Durch den Dichtring wird auch ein selbsttätiges Verstellen des Ventils verhindert, da durch die Haftung an den Wandungen eine Verdrehsicherung entsteht.

Das Ventil besteht weiterhin aus einem in einer Führung verschiebbar angeordneten Ventilkegel, welcher aus der Ventilkegelführung teilweise herausragt.

Vorteilhaft weist der Ventilkegel einen zylindrischen Bereich zur Führung innerhalb der Ventilkegelführung auf, wobei an dem über die Ventilkegelführung überstehenden Bereich der Ventilkegel kegelstupfförmig ausgebildet sein kann. Der Kegelstupfförmige Bereich wirkt mit einem komplementär ausgebildeten Ventilsitz im Hydraulikkanal zusammen. Sowohl der Ventilkegel als auch der Ventilsitz können eine andere Formgebung aufweisen, die vorteilhaft zur Beeinflussung des Durchflusses des Hydraulikflüssigkeit ist. Dabei können der Ventilsitz und der Ventilkegel zueinander komplementär ausgebildet sein. Ventilsitz und Ventilkegel können beispielsweise konvex, konkav oder abgestuft ausgebildet sein, um den Durchfluss der Hydraulikflüssigkeit zusätzlich zu beeinflussen.

Im Ventilkörper ist ein Hohlraum ausgebildet, welcher einen Dehnstoff aufnimmt. Der Hohlraum ist durch eine elastisch verformbare Membran abgeschlossen. Die Membran ist dabei dichtend zwischen dem Ventilkörper und der Ventilkegelführung angeordnet und schließt den Hohlraum mit dem Dehnstoff ab.

Bei einer temperaturbedingten Änderung des Volumens des Dehnstoffes wird die Membran in den Hohlraum für den Dehnstoff eingezogen oder ausgestülpt. Bei einer temperaturbedingten Ausdehnung des Dehnstoffes wölbt sich dabei die Membran in die Ventilkegelführung hinein. Da sich der Ventilkegel auf der Membran abstützt, wird der Ventilkegel entsprechend der temperaturbedingten Bewegung der Membran verschoben. Bei niedriger Temperatur ist dabei der Durchlass für die dann zähflüssigere Hydraulikflüssigkeit weiter geöffnet. Hingegen ist bei hohen Temperaturen der Ventildurchlass weniger geöffnet, um den Durchfluss der nun dünnflüssigeren Hydraulikflüssigkeit ausreichend zu dämpfen. Dadurch wird bei den unterschiedlichen Temperaturen das gleiche Verhalten des Türschließers erzielt.

Das mit dem Dehnstoff als temperaturabhängiges Medium versehene Ventil weist einen großen Betätigungshub des Ventilkegels auf, welcher durch die Übersetzung der Volumenänderung an der Membran erreicht wird. Die Membran liegt einerseits großflächig auf dem Dehnstoff auf und stützt sich andererseits nur auf einer wesentlich kleineren Fläche des Ventilkegels ab, wodurch eine Übersetzung der Dehnstoffbewegung zur Bewegung des Ventilkegels entsprechend dem Flächenverhältnis erfolgt.

In einer weiteren Ausführungsform kann der Ventilkegel zusätzlich auch noch aus einem Material mit einem hohen Wärmeausdehnungskoeffizienten bestehen, wodurch kombinatorisch eine noch größere temperaturabhängige Änderung des Durchflusses von Hydraulikflüssigkeit möglich ist.

Im Nachfolgenden wird ein Ausführungsbeispiel in der Zeichnung anhand der Figuren näher erläutert.

Dabei zeigen:
- **Fig. 1**: ein in einem Türschließer angeordnetes Ventil in einer ersten, geöffneten Stellung;
- **Fig. 2**: das Ventil gemäß Fig. 1 in einer zweiten, weniger geöffneten Stellung.

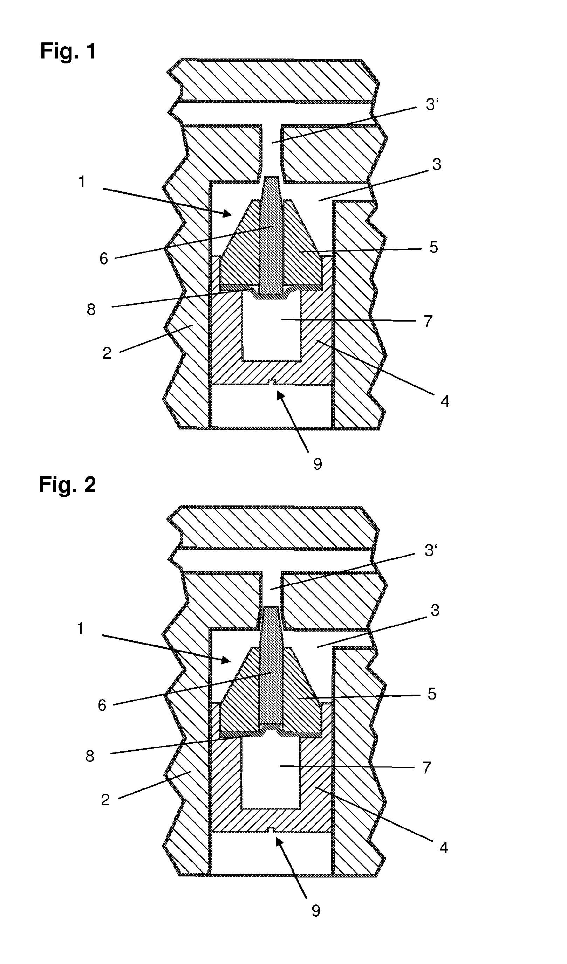

In Fig. 1 ist eine Ausführungsform eines erfindüngsgemässen Ventils 1 für einen Türschließer gezeigt, welches in einem Gehäuse 2 des Türschließers in einem Hydraulikkanal 3 angeordnet ist. Der Hydraulikkanal 3 ist von außerhalb des Gehäuses 2 zugänglich und weist beispielsweise ein Innengewinde auf, welches mit einem an einem Ventilkörper 4 des Ventils 1 angeordneten Außengewinde korrespondiert. Am Ventilkörper 4 ist weiterhin eine Werkzeugaufnahme 9 vorgesehen, welche das Einschrauben des Ventils 1 in das Gehäuse des Türschließers ermöglicht. Es können am Ventilkörper 4 weiterhin noch Dichtelemente, beispielsweise ein in einer Nut im Ventilkörper 4 angeordneter Dichtring, vorgesehen sein, um ein Austreten von Hydraulikflüssigkeit aus dem Türschließer zu vermeiden.

Das Ventil 1 umfasst weiterhin eine Ventilkegelführung 5, welche im Ventilkörper 4 aufgenommen ist. In der Ventilkegelführung 5 ist ein Ventilkegel 6 verschiebbar angeordnet, wobei der Ventilkegel 6 teilweise aus der Ventilkegelführung herausragt. Der Ventilkegel 6 weist vorteilhaft einen zylindrischen Bereich auf, mit dem er in der Ventilkegelführung 5 geführt ist, und einen beispielsweise kegelstupfförmigen Bereich, welcher aus der Ventilkegelführung 5 herausragt.

Im Ventilkörper 4 ist ein Hohlraum ausgebildet, welcher einen Dehnstoff 7 aufnimmt, und welcher Hohlraum durch eine elastisch verformbare Membran 8 abgeschlossen ist. Die Membran 8 ist dabei dichtend zwischen dem Ventilkörper 4 und der Ventilkegelführung 5 angeordnet, um den Hohlraum mit dem Dehnstoff 7 abzuschließen. Bei einer temperaturbedingten Änderung des Volumens des Dehnstoffs 7 wird die Membran 8 in den Hohlraum für den Dehnstoff 7 eingezogen. Demgegenüber wölbt sich bei einer temperaturbedingten Ausdehnung des Dehnstoffes 7 die Membran 8 in die Ventilkegelführung 5 hinein. Der Ventilkegel 6 stützt sich auf die Membran 8 ab, wodurch der Ventilkegel 6 entsprechend der temperaturbedingten Bewegung der Membran 8 in der Ventilkegelführung 5 verschoben wird. Der aus der Ventilkegelführung 5 herausragende Ventilkegel 6 korrespondiert mit einem zugeordneten, in einem Hydraulikkanal 3', in welchen die Hydraulikflüssigkeit aus dem Hydraulikkanal 3 überströmen kann, ausgebildeten Ventilsitz. In der Fig. 1 ist das Ventil 1 in einer Stellung bei niedriger Temperatur gezeigt. Die Membran 8 ist durch das dabei geringe Volumen des Dehnstoffs 7 eingezogen, wodurch der Ventilkegel 6 vom Ventilsitz zurückgezogen ist und einen größeren Durchfluss der bei niedrigerer Temperatur zähflüssigeren Hydraulikflüssigkeit ermöglicht.

Demgegenüber zeigt Fig.2 das Ventil 1 bei höherer Temperatur. Die elastische Membran 8 ist durch Ausdehnung des Dehnstoffs 7 in Richtung auf den Ventilkegel 6 gewölbt, wodurch der Ventilkegel 6 weiter auf den Ventilsitz 10 hin verschoben ist und somit ein geringerer Durchfluss der bei höherer Temperatur dünnflüssigeren Hydraulikflüssigkeit erfolgt.

Der temperaturbedingte Viskositätsunterschied der Hydraulikflüssigkeit wird dabei durch das Ventil 1 kompensiert. Vorteilhaft weist das mit dem Dehnstoff 7 als temperaturabhängiges Medium versehene Ventil 1 einen großen Betätigungshub des Ventilkegels 6 auf. Dieser große Hub wird durch die Übersetzung der Volumenänderung an der Membran 8 erreicht. Die Membran 8 liegt einerseits großflächig auf dem Dehnstoff 7 auf und stützt sich andererseits auf der wesentlich geringeren, zylindrischen Fläche des Ventilkegels 6 ab.

Durch die Anordnung des Ventils 1 in einem Gewinde ist die Grundeinstellung des Ventils 1 möglich, in welcher der Ventilkegel 6 gegenüber dem zugeordneten Ventilsitz einen bestimmten Abstand aufweist, wodurch bei einer vorgegebenen Temperatur ein Durchströmen von Hydraulikflüssigkeit für das gewünschte Verhalten des Türschließers gegeben ist. Der Ventilkegel 6 kann auch eine andere Form, beispielsweise konvex oder abgestuft, aufweisen, um das Strömen der Hydraulikflüssigkeit zusätzlich zu beeinflussen. Der Ventilsitz ist dabei vorteilhaft komplementär ausgebildet.

Alternativ kann der Ventilkegel 6 auch zusätzlich zumindest teilweise noch aus einem Material mit einem hohen Wärmeausdehnungskoeffizienten bestehen, wodurch eine noch größere temperaturabhängige Änderung des Durchflusses von Hydraulikflüssigkeit möglich ist.

### Liste der Referenzzeichen

- 1: Ventil
- 2: Gehäuse
- 3: Hydraulikkanal
- 4: Ventilkörper
- 5: Ventilkegelführung
- 6: Ventilkegel
- 7: Dehnstoff
- 8: Membran
- 9: Werkzeugaufnahme

## Patentansprüche

1. Ventil (1) für einen Türschließer,wobei das Ventil (1) in einem Hydraulikkanal (3) des Türschließers, durch welchen die Hydraulikflüssigkeit des Türschließers strömen kann, regulierend angeordnet ist, und wobei temperaturabhängig das Überströmen der Hydraulikflüssigkeit durch eine Querschnittsveränderung im Hydraullkkanal mittels des Ventils (1) beeinflussbar ist, wodurch temperaturabhängige Viskositätsänderungen der Hydraulikflüssigkeit ausgleichbar sind, und das Ventil (1) einen in einer Ventilkegelführung (5) des Ventils (1) angeordneten Ventilkegel (6) aufweist, wobei sich der Ventilkegel (6) einseitig auf einem in einem Hohlraum in einem Ventilkörper (4) des Ventils (1) angeordneten Dehnstoff (7) abstützt, wobei der Ventilkegel (6) in der Ventilkegelführung (5) dichtend geführt ist, um einen Austritt des Dehnstoffs (7) aus dem Ventil zu verhindern,
**dadurch gekennzeichnet, dass** zwischen dem Dehnstoff (7) und dem Ventilkegel (6) eine Membran (8) angeordnet ist, die den Hohlraum mit dem Dehnstoff (7) im Ventilkörper (4) des Ventils (1) verschließt, wobei die Membran (8) dichtend zwischen dem Ventilkörper (4) und der Ventilkegelführung (5) verspannt ist und die Volumenänderung des Dehnstoffs (7) aufgrund des geringen Querschnitts des Ventilkegels (6) einen großen Hub in der Ventilkegelführung (5) bewirkt, und dass durch die wirksamen Flächen der Membran (8) in Bezug auf den Hohlraum für den Dehnstoff (7) im Ventilkörper (4) und des Ventilkegels (6) in der Ventilkegelführung (5) eine Übersetzung bewirkt ist, wodurch ein großer Hub des Ventilkegels (6) bewirkt ist.

2. Ventil nach Anspruch 1,
**dadurch gekennzeichnet, dass** der Ventilkörper (4) ein Außengewinde aufweist, mittels welchem das Ventil (1) in einem korrespondierenden Gewinde im Gehäuse (2) des Türschließers einstellbar aufgenommen ist.

3. Ventil nach Anspruch 2,
**dadurch gekennzeichnet, dass** der Ventilkörper (4) zur Einstellung des Ventils (1) eine Werkzeugaufnahme (9) aufweist.

4. Ventil nach Anspruch 1,
**dadurch gekennzeichnet, dass** der Ventilkegel (6) zumindest teilweise aus einem Material mit hohem Temperaturkoeffizient besteht.

## Claims

1. Valve (1) for a door closer, wherein the valve (1) is arranged in a regulating manner in a hydraulic channel (3) of the door closer through which the hydraulic fluid of the door closer can flow, and wherein the overflow of the hydraulic fluid through a change in cross section in the hydraulic channel can be influenced by means of the valve (1) in a temperature-dependent manner, with the result that temperature-dependent changes in viscosity in the hydraulic fluid can be equalized, and the valve (1) has a valve cone (6) arranged in a valve cone guide (5) of the valve (1), wherein the valve cone (6) is supported on one side on an expansion material (7) arranged in a cavity in a valve body (4) of the valve (1), wherein the valve cone (6) is guided in a sealed manner in the valve cone guide (5) in order to prevent the expansion material (7) from exiting the valve, **characterized in that** a membrane (8) is arranged between the expansion material (7) and the valve cone (6) and closes the cavity with the expansion material (7) in the valve body (4) of the valve (1), wherein the membrane (8) is braced in a sealed manner between the valve body (4) and the valve cone guide (5) and the change in volume of the expansion material (7) causes a large stroke in the valve cone guide (5) owing to the small cross section of the valve cone (6), and **in that** a transmission is produced by the effective surface areas of the membrane (8) with respect to the cavity for the expansion material (7) in the valve body (4) and of the valve cone (6) in the valve cone guide (5), resulting in a large stroke of the valve cone (6).

2. Valve according to Claim 1, **characterized in that** the valve body (4) has an external thread by means of which the valve (1) is adjustably received in a corresponding thread in the housing (2) of the door closer.

3. Valve according to Claim 2, **characterized in that** the valve body (4) has a tool receptacle (9) for adjusting the valve (1).

4. Valve according to Claim 1, **characterized in that** the valve cone (6) consists at least partially of a material with a high temperature coefficient.

## Revendications

1. Soupape (1) pour un ferme-porte, la soupape (1) étant disposée de manière à avoir un effet de régulation dans un canal hydraulique (3) du ferme-porte, à travers lequel peut s'écouler le fluide hydraulique du ferme-porte, et le débordement du fluide hydraulique pouvant être influencé au moyen de la soupape (1) en fonction de la température par une variation de section transversale dans le canal hydraulique, de sorte que des variations de viscosité du fluide hydraulique dépendant de la température puissent être compensées et la soupape (1) présentant un cône de soupape (6) disposé dans un guide de cône de soupape (5) de la soupape (1), le cône de soupape (6) s'appuyant d'un côté sur un matériau extensible (7) disposé dans une cavité dans un corps de soupape (4) de la soupape (1), le cône de soupape (6) étant guidé de manière hermétique dans le guide de cône de soupape (5) afin d'empêcher une sortie du matériau extensible (7) hors de la soupape,
**caractérisée en ce qu'**entre le matériau extensible (7) et le cône de soupape (6) est disposée une membrane (8) qui ferme la cavité avec le matériau extensible (7) dans le corps de soupape (4) de la soupape (1), la membrane (8) étant tendue de manière hermétique entre le corps de soupape (4) et le guide de cône de soupape (5) et la variation de volume du matériau extensible (7), du fait de la faible section transversale du cône de soupape (6), réalisant une grande course dans le guide de cône de soupape (5), et **en ce qu'**une transmission est réalisée par les surfaces actives de la membrane (8) par rapport à la cavité pour le matériau extensible (7) dans le corps de soupape (4) et du cône de soupape (6) dans le guide de cône de soupape (5), de sorte qu'une grande course du cône de soupape (6) soit réalisée.

2. Soupape selon la revendication 1,
**caractérisée en ce que** le corps de soupape (4) présente un filetage extérieur au moyen duquel la soupape (1) est reçue de manière ajustable dans un filetage correspondant dans le boîtier (2) du ferme-porte.

3. Soupape selon la revendication 2,
**caractérisée en ce que** le corps de soupape (4) présente un porte-outil (9) pour l'ajustement de la soupape (1).

4. Soupape selon la revendication 1,
**caractérisée en ce que** le corps de soupape (6) se compose au moins en partie d'un matériau ayant un coefficient de température élevé.
